# DEMANDE DE BREVET EUROPEEN

(11) **EP 4 390 360 A1**
(43) Date de publication de la demande: **26.06.2024**
(21) Numéro de dépôt: 23214274.5
(22) Date de dépôt: 05.12.2023
(51) Int. Cl.: G01M 13/00, G01B 5/00, G01M 99/00, G06F 11/22, G06F 11/273

(54) **BANC DE TEST AUTOMATISÉ COMPORTANT UN SUPPORT POUR APPAREIL/ÉQUIPEMENT**

(30) Priorité: 23.12.2022 FR 2214430
(71) Demandeur: Ponant Technologies, 26000 Valence (FR)
(72) Inventeur: LE GAL, Thomas, 26000 VALENCE (FR); DESSALES, Antoine, 07800 GEORGES LES BAINS (FR); BARTHELEMY, Christophe, 26120 MONTMEYRAN (FR)
(74) Mandataire: Cabinet Nony

(57) **Abrégé**

L'invention consiste essentiellement à proposer un support de banc de test qui permet de maintenir un appareil/équipement à tester selon deux directions perpendiculaires entre elles et ce, pour une grande variété de formats d'appareil/équipements.

## Description

### Domaine technique

La présente invention concerne le domaine des bancs de tests automatisés d'appareils/équipements.

Elle vise à améliorer les bancs de tests existants en proposant un banc de test automatisé, non intrusif, destiné à réaliser des tests mécaniques et/ou logiciels et/ou visuels et/ou sonores d'interface homme-machine d'un appareil/équipement, tel qu'un équipement électronique muni d'une interface homme-machine comprenant un écran et un clavier, ces derniers pouvant être confondus dans le cas d'un écran tactile.

L'invention vise plus précisément à améliorer la fixation de l'appareil/équipement sur le banc de test.

Parmi les appareils et équipements pouvant être soumis à un banc de test automatisé tel qu'envisagé dans le cadre de l'invention, on peut citer les smartphones, les tablettes, les indicateurs de pesage, les terminaux de paiement, les tableaux de bord ou encore les instruments médicaux portables.

### Technique antérieure

Il est connu de mettre en oeuvre des tests fonctionnels ou d'endurance d'interfaces homme-machine mettant en oeuvre le clavier et/ou l'écran et/ou l'application logicielle standard d'un appareil/équipement avec l'environnement extérieur.

Parmi ces solutions existantes de tests automatisés, il est connu du brevet FR3086406B1 un banc de test automatisé, non intrusif, configuré pour réaliser des tests mécaniques et/ou logiciels et/ou sonores d'interfaces homme-machine d'un appareil/équipement à tester.

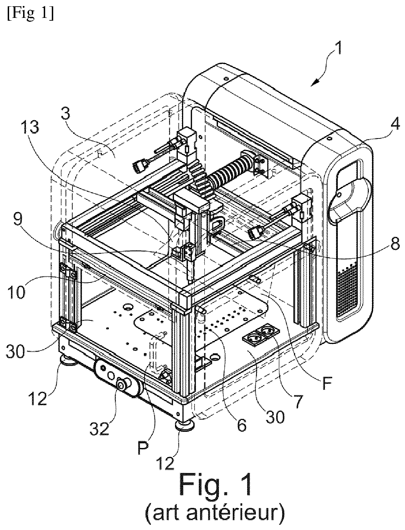

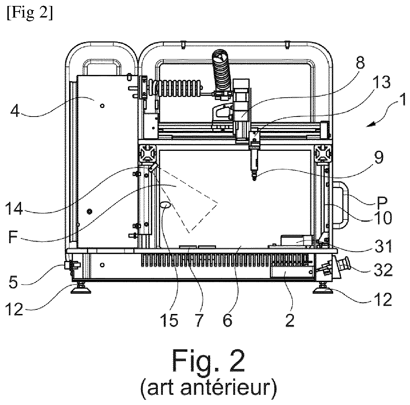

Un banc de test tel que décrit dans ce brevet est représenté en figures 1 et 2. La figure 1 est une vue en perspective avec transparence d'un exemple de banc de test automatisé, globalement désigné par la référence 1. La figure 2 illustre en vue de côté le banc de test 1.

Le banc de test 1 est constitué d'un module avec un bâti 10 assemblé de pluralité de profilés et qui est muni de pieds 12.

Une unité centrale 2, une enceinte 3, un coffret électrique de commande 4 de l'unité centrale et une connectique extérieure 5, de préférence une connectique d'alimentation en 220V et/ou une connectique de type Ethernet sont fixés au bâti 10.

Le fond de l'enceinte 3 comprend un support 6 qui permet de maintenir l'appareil à tester dans une position fixe de référence, pendant des séquences de tests.

Une autre connectique d'alimentation 7 qui peut alimenter l'appareil/équipement à tester et être pilotée est agencée à proximité du support 6.

L'enceinte 3 comprend une pluralité de parois transparentes 30 dont une peut s'ouvrir et constitue pour un opérateur, un accès sécurisé au support 6 depuis l'extérieur. Pour faciliter l'accès, la paroi d'accès 30 est munie d'une poignée P.

Des moyens électroniques 31 permettant la coupure des alimentations de puissance et le cas échéant le verrouillage/déverrouillage de la porte d'accès sont prévus. En outre, un bouton d'urgence 32 fixé sur le bâti 10 à proximité de la porte d'accès permet à un opérateur d'interrompre tout test en cas d'urgence.

Un portique à trois axes (X, Y, Z) 8 est fixé à l'intérieur de l'enceinte 3.

Un palpeur 9 est fixé au portique 8 qui peut donc déplacer en translation le palpeur 9 selon chacun des trois axes X, Y et Z. Le palpeur 9 peut donc venir en contact à souhait avec n'importe quelle zone de l'appareil pendant le(s) test(s), chaque zone de contact constituant une interface (IHM) d'acquisition.

Une caméra 13 est également fixée au portique 8. Cette caméra permet la prise d'images et/ou de vidéos de l'appareil/équipement, plus particulièrement de la ou des interfaces (IHM) de restitution visuelle de l'appareil/équipement, pendant le(s) test(s).

Pour maitriser les conditions d'éclairage à l'intérieur de l'enceinte et donc augmenter la qualité des prises d'image et/ou de la vidéo de la caméra 13, des moyens d'éclairage 14 du support de l'appareil/équipement sont fixés au bâti 10.

L'unité centrale 2 peut piloter l'allumage, l'extinction et le cas échéant le réglage de l'intensité du faisceau F des moyens d'éclairage 14 lors de la ou des séquence(s) de test(s) de l'appareil/équipement.

Un microphone 15 est fixé à l'intérieur de l'enceinte 3. Ce microphone 15 est adapté pour capter les sons émis par au moins une interface de restitution sonore de l'appareil/équipement, pendant le(s) test(s).

Le fonctionnement du banc de test 1 qui vient d'être décrit va maintenant être brièvement expliqué.

L'opérateur vient positionner et le cas échéant fixer l'appareil/équipement à tester sur le support 6.

Puis, il branche une alimentation de l'appareil/équipement à tester sur la prise d'alimentation 7 que l'unité centrale 2 peut piloter.

L'opérateur ferme alors la porte d'accès 30 de l'enceinte 3 qui est verrouillée par les moyens ad'hoc 31.

Une séquence de test de l'appareil/équipement peut alors être initiée.

Un logiciel de contrôle-commande chargé dans l'unité centrale 2 a déjà récupéré ou récupère la liste des tests à exécuter dans un langage dédié.

Le logiciel pilote et synchronise alors tout ou partie des composants internes à l'enceinte 3 selon une séquence de test prédéfinie : le portique 8 à trois axes et donc le palpeur 9, la caméra 13 et le cas échéant les moyens d'éclairage 14, le microphone 15, et le cas échéant la prise d'alimentation électrique.

Le logiciel récupère alors les informations fonctionnelles de l'appareil/équipement testé.

En particulier, le logiciel peut effectuer un traitement d'images issues de la caméra 13 de préférence, avec de la reconnaissance de caractère OCR, 7 segments, 16 segments, et/ou de la reconnaissance de couleur, et/ou de la reconnaissance de forme, et/ou de la reconnaissance d'icônes.

En outre, le logiciel peut effectuer un traitement des sons émis par l'appareil/équipement testé, afin de distinguer les opérations issues des IHM.

Au final, le logiciel permet de remonter les résultats et les traces des tests exécutés dans un format dédié, qui peuvent enregistrer dans un ou plusieurs fichiers dans l'unité centrale 2 ou dans un support d'enregistrement extérieur via la connectique extérieure 5.

Le banc de test 1 qui vient d'être décrit nécessite une intervention importante de l'opérateur pour fixer l'appareil/équipement testé sur le support 6. En effet, l'opérateur doit changer le système de fixation à chaque fois qu'un modèle différent d'appareil/équipement est testé. Cela entraîne un temps de remplacement conséquent ainsi que des risques d'erreurs humaines dans le choix ou dans l'installation du système de fixation.

Il est connu de mettre en oeuvre des supports d'appareils électroniques : le brevet US9473607B2 décrit par exemple un support de smartphone pour habitacle de véhicule automobile. La demande US20210005368A1 divulgue un support magnétique pour appareil électronique. Ces solutions ne sont toutefois pas adaptées à une utilisation sur un banc de test car jugées pas assez industrielles.

Il existe donc un besoin pour proposer une solution de support d'appareil/équipement pour banc de test qui pallie les inconvénients des solutions existantes, en particulier en permettant de simplifier l'installation d'un appareil/équipement sur le banc de test et Le but de l'invention est de répondre au moins partiellement à ce besoin.

### Exposé de l'invention

Pour ce faire, l'invention a pour objet, sous l'un de ses aspects, un banc de test d'un appareil/équipement, comportant un support configuré pour fixer l'appareil/équipement, le support comprenant :
- un dispositif de maintien configuré pour maintenir l'appareil/équipement comprenant :
   - une pièce d'appui mobile en translation selon un axe Y,
   - au moins une butée,
   - un organe élastique exerçant une force sur la pièce d'appui en direction de la butée pour maintenir l'appareil/équipement entre la pièce d'appui et la butée,
- une pince comprenant deux mors mobiles l'un vers l'autre pour serrer l'appareil/équipement, selon un axe X perpendiculaire à l'axe Y.

Ainsi, l'invention consiste essentiellement à proposer un support de banc de test qui permet de maintenir un appareil/équipement à tester selon deux directions perpendiculaires entre elles et ce, pour une grande variété de formats d'appareil/équipements.

La solution selon l'invention permet de fixer de manière fiable et répétable en position l'appareil/équipement à tester.

Avantageusement, l'invention permet de fixer des appareils/équipements de tailles et de formats différents sans changer de pièces et sans nécessiter d'outillage spécifique. Cela permet de faciliter et d'accélérer le changement d'appareil/équipement sur le banc de test et de réduire le risque d'erreurs humaines. Cela permet d'assurer également la répétabilité du positionnement au millimètre près.

De préférence, le banc de test comporte en outre un palpeur.

De préférence également, le support est configuré de sorte que les axes X et Y soient horizontaux dans la position de fonctionnement du banc de test.

Le dispositif de maintien peut avantageusement être agencé entre les mors de la pince.

Selon une caractéristique avantageuse, le banc de test comporte une semelle de maintien agencée sur une surface supérieure du dispositif de maintien et configurée pour recevoir l'appareil/équipement, la semelle de maintien étant de préférence réalisée en polyoxyméthylène. La semelle de maintien permet notamment d'adapter le support à des appareils/équipements de hauteurs différentes et de faciliter la pose de l'appareil/équipement sur le support.

De préférence, la butée est agencée sur la semelle de maintien.

Selon une autre caractéristique avantageuse, le support comporte en outre une semelle anti-vibration agencée en contact avec le banc de test et configurée pour limiter la transmission de vibrations entre le banc de test et l'appareil/équipement, la semelle anti-vibration étant de préférence réalisée en polypropylène.

Avantageusement, le support comporte en outre un capteur de luminosité configuré pour détecter une lumière émise par un flash de l'appareil/équipement.

Le support peut également comporter un capteur de vibration agencé pour être en contact avec l'appareil/équipement lorsque l'appareil/équipement est fixé sur le support et configuré pour convertir une vibration de l'appareil/équipement en un signal analogique.

Selon une variante, le support comporte un module d'insertion de câbles configuré pour recevoir un câble comportant une fiche, le module d'insertion de câbles étant mobile entre une position d'insertion dans laquelle la fiche du câble est insérée dans une prise correspondante de l'appareil/équipement fixé sur le support et une position de retrait.

Selon un mode de réalisation préféré, le banc de test comporte un dispositif mécanique, de préférence un robot six axes, configuré pour déplacer l'appareil/équipement entre le support et un emplacement de stockage.

De préférence, les mors de la pince sont fixés au corps de la pince de manière amovible, de préférence par des vis. Cela permet de simplifier la maintenance du support et éventuellement d'adapter le support à des appareils/équipements de dimensions non compatibles avec un jeu de mors donné.

L'invention concerne également un procédé de fixation d'un appareil/équipement sur le support d'un banc de test selon l'invention, comportant les étapes consistant à :
a/ agencer l'appareil/équipement dans le dispositif de maintien de sorte à maintenir l'appareil/équipement entre la pièce d'appui et la butée le long de l'axe Y ;
b/ rapprocher les mors de la pince afin de serrer l'appareil/équipement maintenu, le long de l'axe X.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] La figure 1 est une vue en perspective d'un banc de test automatisé selon l'état de l'art.
[Fig 2] La figure 2 est une vue de côté du banc de test de la figure 1.
[Fig 3] La figure 3 représente un support de banc de test selon l'invention.
[Fig 4] La figure 4 est une vue du support de la figure 3 sans certaines parties.
[Fig 5] La figure 5 est une vue du support de la figure 3 sur lequel est fixé un appareil/équipement.
[Fig 6] La figure 6 est une vue du support de la figure 3 sur lequel est fixé un appareil/équipement de dimensions différentes de celui de la figure 5.
[Fig 7] La figure 7 est une vue de détail de la semelle de maintien d'un support de banc de test selon l'invention.
[Fig 8] La figure 8 est une vue de détail du module d'insertion de câbles d'un support de banc de test selon l'invention.
[Fig 9] La figure 9 est une vue du support de la figure 3 comportant un appareil/équipement en cours d'installation.
[Fig 10] La figure 10 est une vue du support de la figure 3 comportant un appareil/équipement en configuration fixée sur le support.

### Description détaillée

Dans l'ensemble de la présente demande, les termes « horizontal » et « supérieur » sont à comprendre par référence à un banc de test selon l'invention agencé en position de fonctionnement, l'appareil/équipement fixé sur le support étant maintenu à plat dans le plan horizontal.

Les figures 1 et 2 ont déjà été commentées en préambule et ne seront donc pas décrites ci-dessous.

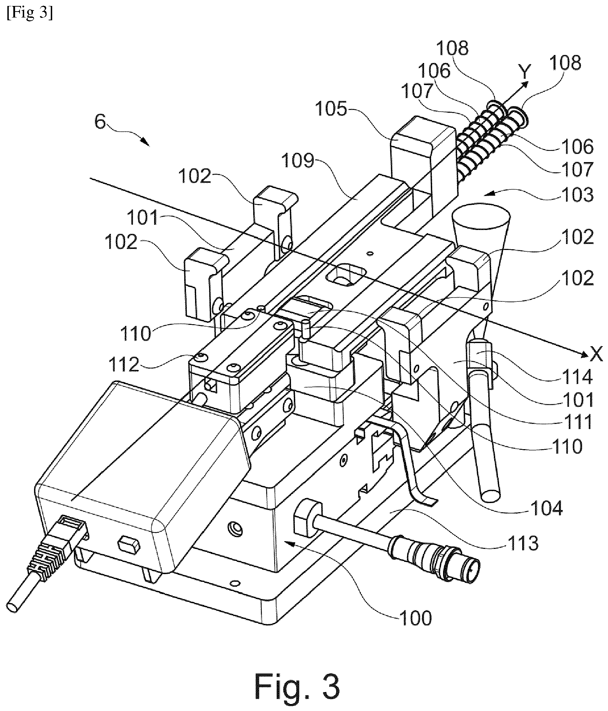

On a illustré à la figure 3 un support 6 de banc de test selon l'invention destiné à être fixé sur un banc de test tel que celui illustré aux figures 1 et 2. Le banc de test peut notamment comporter un palpeur, une caméra et un microphone destinés à tester les fonctions d'un appareil/équipement.

Le support 6 comporte une pince 100 ayant deux mors 101 alignés selon un axe X. Chaque mors 101 comporte deux extrémités de préhension 102. Les mors 101 de la pince 100 permettent de centrer et maintenir entre l'appareil/équipement déposé sur le support.

De préférence, les mors 101 sont fixés au corps de la pince 100 de manière détachable, par exemple par des vis. Cela permet de simplifier le changement des mors et donc leur maintenance ainsi que leur adaptation à différents modèles d'appareils/équipements, notamment pour prendre en compte les dimensions variables de ces modèles.

Les extrémités de préhension 102 sont configurées pour maintenir l'appareil/équipement en place et sont de préférence réalisées en un matériau de faible dureté afin de ne pas abîmer l'appareil/équipement, tel que du polyoxyméthylène (POM).

Le support 6 comporte également un dispositif de maintien 103 disposé entre les mors 101.

Le dispositif de maintien 103 comporte une surface supérieure 104 qui s'étend le long d'un axe Y perpendiculaire à l'axe X dans le plan horizontal. A une extrémité de la surface supérieure 104, le dispositif de maintien 103 comporte une pièce d'appui 105 montée coulissante sur deux tiges 106 s'étendant le long de l'axe Y. La pièce d'appui 105 est soumise à une force élastique en direction de la surface d'appui. La force élastique est exercée par un organe élastique 107 tel que deux ressorts hélicoïdaux chacun agencé autour d'une tige 106. Les ressorts hélicoïdaux prennent appui d'un côté sur des appuis 108 solidaires de la tige 106 et de l'autre sur la pièce d'appui 105.

Une semelle de maintien 109 est disposée sur la surface supérieure 104 pour recevoir l'appareil/équipement 120. Des semelles de maintien 109 de différentes épaisseurs peuvent être utilisées afin d'adapter le support 6 à des appareils/équipements de différentes épaisseurs. La semelle de maintien 109 peut avantageusement être configurée de manière à faciliter le positionnement de l'appareil/équipement par sa géométrie.

De préférence, la semelle de maintien 109 est réalisée en polyoxyméthylène (POM) afin de limiter les risques d'abîmer l'appareil/équipement.

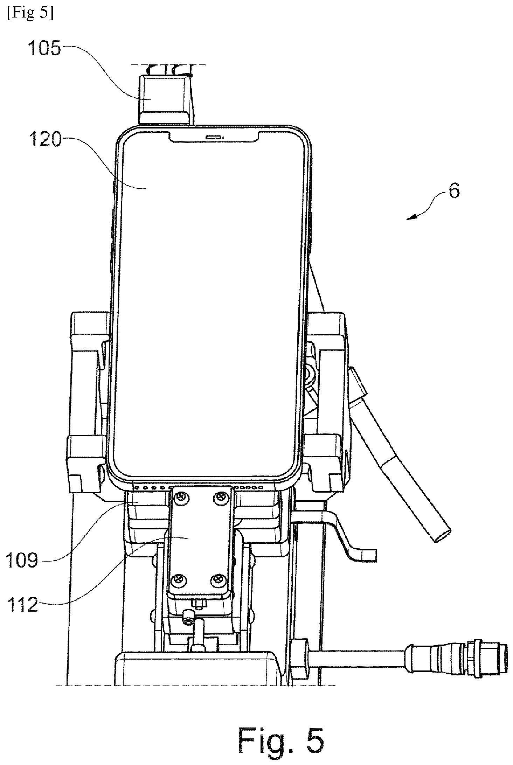

Comme représenté à la figure 5, l'appareil/équipement 120 sous test est agencé sur la semelle de maintien 109. Le support 6 peut toutefois ne pas comporter de semelle de maintien 109, l'appareil/équipement 120 étant alors déposé directement sur la surface supérieure 104.

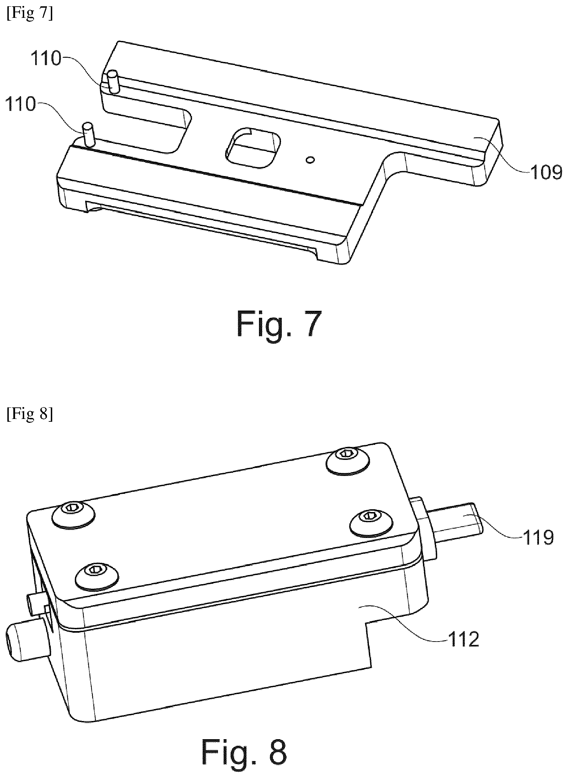

La semelle de maintien 109 est représentée isolément à la figure 7. Elle peut avantageusement comporter des butées 110 qui font saillie sur la surface de la semelle. Les butées 110 sont agencées à proximité d'une extrémité de la semelle de maintien opposée à la pièce d'appui 105 et sont configurées pour bloquer l'appareil/équipement 120 sous test dans une position donnée le long de l'axe Y lorsque la pièce d'appui 105 exerce une force sur l'appareil/équipement 120 en direction des butées 110.

Alternativement, les butées 110 peuvent être agencées sur la surface d'appui 104 ou sur un autre élément du support 6.

La position des butées 110 dépend notamment des dimensions de l'appareil/équipement 120 et de celles du support 6.

Avantageusement, la surface d'appui 104 et la semelle de maintien 109 peuvent comporter des ouvertures traversantes alignées et configurées pour recevoir un capteur de vibration 111. Le capteur de vibration 111 est configuré pour être en contact avec l'appareil/équipement 120 lorsque ce dernier est fixé sur le support de sorte à détecter des vibrations produites par l'appareil/équipement.

Avantageusement, un algorithme de traitement de signal peut être mis en oeuvre pour détecter des profils de vibrations caractéristiques dans les signaux captés par le capteur de vibration 111.

Le support 6 comporte également un module d'insertion de câbles 112 monté sur un bloc-support 115. Le bloc-support 115 et le module d'insertion de câbles 112 sont agencés à proximité d'une ou de plusieurs prises de l'appareil/équipement 120 configurées pour recevoir la fiche d'un câble correspondant lorsque l'appareil/équipement est fixé sur le support.

Le module 112 est configuré pour guider un câble 119 tel qu'un câble d'alimentation et permettre son insertion dans la prise correspondante de l'appareil/équipement 120. La figure 8 est une vue de détail du module 112 logeant le câble 119. Le module 112 permet de guider la connexion électrique d'alimentation directement sans possibilité pour l'utilisateur de se tromper.

De préférence, le support 6 comporte un capteur de luminosité 114 configuré pour détecter la lumière émise par le flash d'un appareil/équipement.

Le support 6 comporte avantageusement une semelle anti-vibration 113 destinée à être agencée en contact avec le banc de test et configurée pour minimiser la transmission de vibrations entre le banc de test et l'appareil/équipement 120. Les autres éléments du support 6 sont agencés sur la semelle anti-vibration 113.

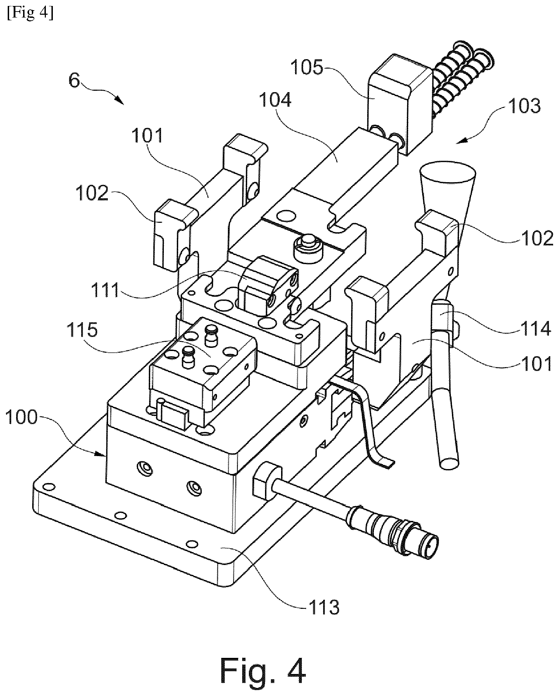

La figure 4 représente le support 6 de la figure 3, la semelle de maintien 109 et le module d'insertion de câble 112 étant retirés.

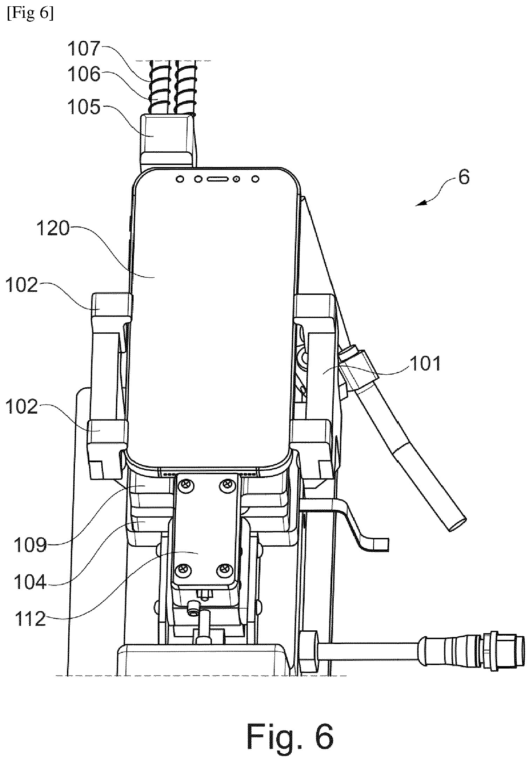

Les figures 5 et 6 représentent le support 6 de la figure 3, des smartphones 120 de dimensions différentes étant fixés sur le support 6.

### Fonctionnement

Initialement, comme représenté à la figure 3, les mors 101 de la pince 100 sont en position écartée pour laisser un espace permettant à l'opérateur ou à un dispositif mécanique tel qu'un robot six axes de déposer l'appareil/équipement 120 entre les mors sur la semelle de maintien 109 agencée sur la surface supérieure 104 du dispositif de maintien 103.

Le module 112, le capteur de vibrations 111 et le capteur de luminosité 114 sont installés sur le support s'ils ne le sont pas encore.

L'appareil/équipement 120 est ensuite déposé sur la semelle de maintien 109. Pour ce faire, la pièce d'appui 105 est écartée de la surface supérieure 104 afin de laisser suffisamment d'espace à l'appareil/équipement 120. De préférence, la pièce d'appui 105 est écartée par un bord de l'appareil/équipement poussé contre la pièce d'appui 105.

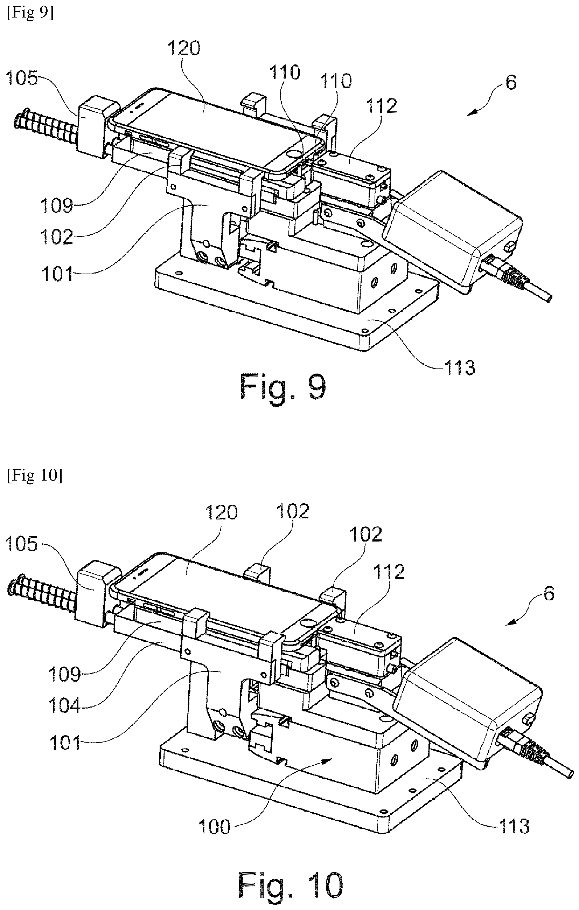

Comme représenté à la figure 9, la force de rappel exercée par les ressorts hélicoïdaux 107 permet ensuite à la pièce d'appui 105 d'exercer une force sur l'appareil/équipement 120 pressant ce dernier contre les butées 110.

L'appareil/équipement est alors maintenu en place le long de l'axe Y.

Une fois l'appareil/équipement 120 en place entre la pièce d'appui 105 et les butées 110, les mors 101 de la pince 100 sont rapprochés afin de centrer et de serrer l'appareil/équipement 120 le long de l'axe X. La pince est configurée pour maintenir l'appareil/équipement avec suffisamment de force pour que ce dernier reste immobile au cours des tests menés par le banc de test, sans le détériorer.

A titre d'exemple, une force comprise entre 10 N et 50 N est avantageusement appliquée par la pince 100 sur l'appareil/équipement.

La précision du positionnement de l'appareil/équipement 120 selon l'axe Y par le dispositif de maintien 103 et selon l'axe X par la pince 100 est de préférence comprise entre 0,05 mm et 0,2 mm, par exemple 0,1 mm.

Une fois l'appareil/équipement 120 positionné et maintenu sur le support 6, l'opérateur peut déplacer le module d'insertion de câbles 112 afin d'insérer la fiche du câble 119 logé dans le module 112 dans la prise correspondante de l'appareil/équipement, comme illustré à la figure 10. Le module d'insertion de câbles 112 peut également être déplacé de manière automatisée, par exemple par un robot six axes.

De manière avantageuse, le support 6 est configuré pour laisser libres d'accès les boutons latéraux, les prises de câbles, les objectifs de caméra ou d'appareil photographique, les micros et/ou les haut-parleurs de l'appareil/équipement 120.

L'appareil/équipement 120 peut alors être soumis à des séquences de tests réalisées par le banc de test.

Le support 6 permet de gérer des appareils/équipements de différentes dimensions sans changer de pièces ni utiliser d'outillage. Toutefois, si l'appareil/équipement a une épaisseur différente des épaisseurs standard pour une catégorie d'appareil/équipement, l'opérateur peut aisément remplacer la semelle de maintien 109 par une semelle de maintien d'épaisseur adaptée.

D'autres variantes et améliorations peuvent être prévues sans pour autant sortir du cadre de l'invention. L'invention n'est pas limitée à une catégorie d'appareil/équipement spécifique. Parmi les appareils et équipements pouvant être soumis à un banc de test tel qu'envisagé dans le cadre de l'invention, on peut citer les smartphones, les tablettes, les indicateurs de pesage, les terminaux de paiement, les tableaux de bord ou encore les instruments médicaux portables.

## Revendications

1. Banc de test (1) d'un appareil/équipement (120), comportant un support (6) configuré pour fixer l'appareil/équipement, le support comprenant :
- un dispositif de maintien (103) configuré pour maintenir l'appareil/équipement comprenant :
• une pièce d'appui (105) mobile en translation selon un axe Y,
• au moins une butée (110),
• un organe élastique (107) exerçant une force sur la pièce d'appui (105) en direction de la butée (110) pour maintenir l'appareil/équipement entre la pièce d'appui (105) et la butée (110),
- une pince (100) comprenant deux mors (101) mobiles l'un vers l'autre pour serrer l'appareil/équipement, selon un axe X perpendiculaire à l'axe Y.

2. Banc de test selon la revendication 1, comportant une semelle de maintien (109) agencée sur une surface supérieure (104) du dispositif de maintien et configurée pour recevoir l'appareil/équipement, la semelle de maintien étant de préférence réalisée en polyoxyméthylène.

3. Banc de test selon la revendication précédente, la butée (110) étant agencée sur la semelle de maintien.

4. Banc de test selon l'une des revendications précédentes, le support comportant en outre une semelle anti-vibration (113) agencée en contact avec le banc de test et configurée pour limiter la transmission de vibrations entre le banc de test et l'appareil/équipement, la semelle anti-vibration étant de préférence réalisée en polypropylène.

5. Banc de test selon l'une des revendications précédentes, le support comportant en outre un capteur de luminosité (114) configuré pour détecter une lumière émise par un flash de l'appareil/équipement.

6. Banc de test selon l'une des revendications précédentes, le support comportant un capteur de vibration (111) agencé pour être en contact avec l'appareil/équipement lorsque l'appareil/équipement est fixé sur le support et configuré pour convertir une vibration de l'appareil/équipement en un signal analogique.

7. Banc de test selon l'une des revendications précédentes, le support comportant un module d'insertion de câbles (112) configuré pour recevoir un câble (119) comportant une fiche, le module d'insertion de câbles étant mobile entre une position d'insertion dans laquelle la fiche du câble est insérée dans une prise correspondante de l'appareil/équipement fixé sur le support et une position de retrait.

8. Banc de test selon l'une des revendications précédentes, comportant un dispositif mécanique, de préférence un robot six axes, configuré pour déplacer l'appareil/équipement entre le support et un emplacement de stockage.

9. Banc de test selon l'une des revendications précédentes, les mors de la pince étant fixés au corps de la pince de manière amovible, de préférence par des vis.

10. Procédé de fixation d'un appareil/équipement sur le support d'un banc de test selon l'une des revendications précédentes, comportant les étapes consistant à :
a/ agencer l'appareil/équipement dans le dispositif de maintien de sorte à maintenir l'appareil/équipement entre la pièce d'appui et la butée le long de l'axe Y ;
b/ rapprocher les mors de la pince afin de serrer l'appareil/équipement maintenu le long de l'axe X.
